Europäisches Patentamt

European Patent Office

Office européen des brevets

(11) Veröffentlichungsnummer: **0 469 559 A1**

## (12) EUROPÄISCHE PATENTANMELDUNG

(21) Anmeldenummer: **91112816.3**

(22) Anmeldetag: **30.07.91**

(51) Int. Cl.5: **D04H 1/00, D04H 3/12**

(30) Priorität: **02.08.90 DE 4024512**

(43) Veröffentlichungstag der Anmeldung:
**05.02.92 Patentblatt 92/06**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Lachenmeir, Werner**
**Reifenbrunner Strasse 44**
**W-8905 Mering(DE)**
Erfinder: **Schöps, Michael**
**Auenweg 11**
**W-8934 Grossaitingen(DE)**
Erfinder: **Gebauer, Elke**
**Winterstrasse 28a**
**W-8903 Bobingen(DE)**
Erfinder: **Vock, Günther, Dr.**
**Dr.-Kämpf-Strasse 10**
**W-8903 Bobingen(DE)**

(54) Tiefziehfähiges Textilmaterial und daraus hergestellte Formkörper.

(57) Beschrieben wird ein isotroper, gut tiefziehfähiger Vliesstoff, der als Filamentvliestoff ausgebildet ist und zu mindestens 30 Gew.% aus gering orientierten, grobtitrigen Filamenten besteht, und der durch einen Schmelzbinder verfestigt ist. Ferner ein aus diesem Vliesstoff hergestelltes beharztes, flächenförmiges Prepreg, ein unter Verwendung des unbeharzten oder beharzten tiefziehfähigen Vliesstoffs hergestelltes dreidimensionales verformtes Textilgebilde und ein Sandwichmaterial mit einem Kern aus dem besagten dreidimensional verformten, beharzten Textilgebilde.

Ferner werden beschrieben Verfahren zur Herstellung der oben bezeichneten Gegenstände.

Fig. 1

EP 0 469 559 A1

Die vorliegende Erfindung betrifft einen tiefziehfähigen Vliesstoff, ein daraus hergestelltes beharztes flächenförmiges Prepreg, ein unter Verwendung des unbeharzten oder beharzten tiefziehfähigen Vliesstoffs hergestelltes dreidimensional verformtes Textilgebilde und ein Sandwichmaterial mit einem Kern aus dem besagten dreidimensional verformten, beharzten Textilgebilde. Ferner betrifft die Erfindung Verfahren zur Herstellung der oben bezeichneten Gegenstände.

In der EP-A-247 232 werden Vliesstoffe beschrieben aus Filamenten geringer Vororientierung, die sich in einer Bruchdehnung von über 100% oder einer Doppelbrechung von 0.01 bis 0,07 zeigt. Diese Vliesstoffe werden durch heiße Prägewalzen thermisch vorverfestigt, befeuchtet und dann unter Spannung thermisch fixiert. Damit ergeben sich verfestigte Prägepunkte, die die Beweglichkeit der Filamente im Vliesstoff stark begrenzen, und durch die nachfolgende Fixierung unter Spannung ergibt sich eine Anisotropie der thermomechanischen Eigenschaften, die die Verformbarkeit derartiger Vliesstoffe zumindest in Spannungsrichtung stark beeinträchtigt.

Aus der DE-A-30 29 752 ist ein Verfahren bekannt zur Herstellung eines tiefgezogenen Formteils aus einem Stapelfaser-Vlies bei dem ein Stapelfaser-Vlies eingesetzt wird, das wenigstens 10 Gew.% verstreckbare Fasern mit einer Bruchdehnung bei 150°C unter dem Schmelzpunkt von mindestens 100% enthält, das durch Nadeln verfestigt ist und das bei einer Temperatur zwischen 150°C und dem Schmelzpunkt der verstreckbaren Fasern tiefgezogen wird.

Das Vlies kann durch ein thermoplastisches oder duroplastisches Bindemittel zusätzlich verstärkt sein.

Die für dieses Material eingesetzten Stapelfasern können aus den verschiedensten synthetischen Polymeren bestehen und haben ausweislich der Beispiele Stapellängen von ca. 50 - 80 mm und Einzelfilamenttiter von 1,5 bis 20 den.

Die hergestellten Formteile eignen sich als selbsttragende Filter. Sie sind jedoch wegen der ausschließlichen Verwendung von Stapelfasern mechanisch weniger belastbar. Die Druckschritt gibt keinen Hinweis, daß ein tiefziehfähiges Vlies auch aus Endlosfasern aufgebaut werden könnte; vielmehr wird der Fachmann zu der Annahme veranlaßt, daß die Tiefziefähigkeit dieses bekannten Vlieses aus der Verwendung von Kurzschnittfasern resultiert, die beim Tiefziehprozess relativ leicht aneinander vorbeigleiten können.

Ein verformbares Spinnvlies, das ausschließlich aus teilverstreckten, endlosen Synthesefasern besteht, ist aus der DE-B 1 560 797 bekannt. Das Fasermaterial dieser Vliese kann aus Polyamiden, Polyestern oder Polyolefinen bestehen. Zur Verfestigung wird dieses Vlies musterartig verdichtet und mit örtlich variierenden Bindemittelkonzentrationen imprägniert. Diese spezielle Art der Verfestigung ist nach den Angaben dieser Druckschritt für die Verformbarkeit des Vlieses von ausschlaggebender Bedeutung. Ähnlich wie bei der gemäß EP-A-247 232 ausgeführten punktförmigen Verfestigung ergibt sich jedoch auch hier eine Anisotropie in der Beweglichkeit der Filamente innerhalb des Vliesstoffes, die die dreidimensionale Verformbarkeit des Vliesstoffs beeinträchtigt.

Es ist auch bereits aus der EP-A-250 005 bekannt, aus Geweben und normalen Vliesen durch Tiefziehen verformte dreidimensionale Gebilde herzustellen. Der beim Tiefziehprozeß eintretende Flächengewinn soll nach den Angaben dieser Druckschritt nur aus der Konstruktionsdehnung dieser Flächengebilde resultieren und ist dementsprechend gering.

Durch die vorliegende Erfindung wird ein isotroper, gut tiefziehfähiger Vliesstoff zur Verfügung gestellt, der unter den normalen Verarbeitungsbedingungen, insbesondere beim Imprägnierprozeß, eine sehr gute Dimensionskonstanz zeigt, und der gleichzeitig ein für alle praktischen Anwendungsfälle ausreichend großes Tiefziehverhältnis ermöglicht.

Der erfindungsgemäße isotrope, gut tiefziehfähige Vliesstoff ist als Filamentvliesstoff ausgebildet und dadurch gekennzeichnet, daß er zu mindestens 30 Gew.% aus gering orientierten, grobtitrigen Filamenten mit einem Titer von mehr als 7 dtex besteht und daß er durch einen Schmelzbinder verfestigt ist, der beispielsweise in Pulverform, vorzugsweise aber in Form von Bindefasern eingebracht ist.

Als Schmelzbinder kommen insbesondere Polymere in Betracht, deren Schmelzpunkt niedriger liegt als der Schmelzpunkt der das Spinnvlies bildenden, gering orientierten, grobtitrigen Filamente. Zweckmäßigerweise liegt der Schmelzpunkt des Schmelzbinders etwa 10°C, vorzugsweise etwa 30°C unter dem Schmelzpunkt der grobtitrigen, gering orientierten Filamente.

Die Schmelztemperatur des Binders kann oberhalb oder unterhalb der Verformungstemperatur des Tiefziehprozesses gewählt werden, dem der Vliesstoff bei der Verarbeitung zu Formkörpern unterworfen wird. Wählt man die Schmelztemperatur des Binders tiefer als die Verformungstemperatur, so lösen sich beim Tiefziehen die Bindepunkte des Vliesstoffes und seine Filamente werden weitgehend frei beweglich; damit ergibt sich eine nahezu ungehinderte Verformbarkeit.

Besonders geeignete Schmelzbinder bestehen aus Polyestern, vorzugsweise Polybutylenterephthalat oder aus modifizierten Polyestern mit entsprechend abgesenktem Schmelzpunkt, vorzugsweise einem beispielsweise durch Einbau von Isophthalsäureresten modifiziertem Polyethylenterephthalat. Der Schmelzbinderanteil am Vliesstoff-Gewicht beträgt zweckmäßigerweise 5 bis 25 Gew.%, vorzugsweise 10 bis 15 Gew.%.

Innerhalb dieses Bereichs wird der Schmelzbinderanteil so niedrig wie möglich gewählt und der übrigen Zusammensetzung des Vliesstoffs und dem beabsichtigten Verformungsgrad angepaßt.

Sofern der Schmelzbinder in Form von Bindefasern im Vliesstoff vorliegt, hat er in der Regel Filamenttiter im Bereich von 1 bis 20 dtex.

Wenn es zweckmäßig ist, z.B. für die Belange des Herstellungsprozesses, können die erfindungsgemäßen Vliese auch mechanisch, beispielsweise durch Nadeln oder andere bekannte mechanische Verfahren vorverfestigt sein.

Die Orientierung der in den erfindungsgemäßen Vliesstoffen enthaltenen gering orientierten, grobtitrigen Filamente, wird zweckmäßigerweise so eingestellt, daß sie einer Höchstzugkraftdehnung von mindestens 80 %, vorzugsweise von mindestens 100 % entspricht. Eine Obergrenze für die Höchstzugkraftdehnung der gering orientierten, grobtitrigen Filamente ist im Grunde nur durch deren Herstellbarkeit gegeben. Es ist jedoch vorteilhaft, die Orientierung dieser Filamente so einzustellen, daß sich eine Höchstzugkraftdehnung zwischen 100 und etwa 350 % ergibt. Besonders bevorzugt ist es, den Orientierungsgrad der gering orientierten, grobtitrigen Filamente, d.h. ihre Höchstzugkraftdehnung so an den beabsichtigten Verwendungszweck, d.h an die durch Tiefziehen zu erreichende dreidimensionale Verformung anzupassen, daß in den verstreckten Bereichen die grobtitrigen Filamente nicht reißen können, aber auch keine allzugroße Restverstreckbarkeit mehr aufweisen. Besonders bevorzugt ist es daher, die Orientierung der grobtitrigen Filamente, d.h. ihre Höchstzugkraftdehnung so einzustellen, daß nach der Tiefziehverformung des erfindungsgemäßen Vlieses die grobtitrigen Filamente in den verstreckten Bereichen noch eine Restverstreckbarkeit von etwa 10 bis 50%, insbesondere 10 bis 30%, aufweisen.

Die in den erfindungsgemäßen Vliesstoffen enthaltenen grobtitrigen Filamente, haben in der Regel Einzeltiter von 7 bis 30 dtex, vorzugsweise von 10 bis 25 dtex. Auch Titer außerhalb dieser zweckmäßigerweise einzuhaltenden Titergrenzen sind möglich, sofern darauf geachtet wird, daß die oben näher beschriebenen Bedingungen für die Orientierung des Filamentmaterials eingehalten werden können.

Für spezielle Einsatzgebiete bestehen die erfindungsgemäßen tiefziehfähigen Vliesstoffe zu 100 % aus den gering orientierten, grobtitrigen Filamenten. Es hat sich jedoch gezeigt, daß es überraschenderweise möglich ist, auch erfindungsgemäße gut tiefziehfähige Vliese herzustellen, die bis zu 70% andere Fasern enthalten.

Diese "anderen Fasern" können jedem bekannten für die Vliesherstellung geeigneten Fasertyp entsprechen. Sie haben vorzugsweise einen normalen bis hohen Orientierungsgrad und können demgemäß normal bis hoch reißfest sein und sie können als Stapelfasern oder, vorzugsweise, als Endlosfasern vorliegen. Daher soll in der folgenden Beschreibung der Begriff "andere Fasern" stets alle diese Fasertypen umfassen.

Es ist überraschend, daß sich derartige, nur ca. 30% gering orientierte, grobtitrige Filament aufweisende erfindungsgemäße Vliese immer noch gut tiefziehen lassen, während bekannte Vliese nur eine mäßige Tiefziehfähigkeit aufweisen, und bei höheren Tiefziehverhältnissen in den verstreckten Zonen reißen. Die Tiefziehfähigkeit von erfindungsgemäßen Vliesen mit einem überwiegenden Anteil anderer Fasern dürfte darauf zurückzuführen sein, daß die im Vlies enthaltenden Anteile gering orientierter, grobtitriger Filamente eine überraschend gute Stütz- und Stabilisierungsfunktion übernehmen, die ein Reißen der übrigen Faseranteile des erfindungsgemäßen Vlieses erstaunlich wirksam verhüten. Bevorzugte erfindungsgemäße Vliesstoffe enthalten ein Anteil von 40 bis 85 Gew.% der gering orientierten, grobtitrigen Filamente oder, wie oben bereits ausgeführt, sie bestehen zu 100% aus gering orientierten, grobtitrigen Filamenten.

Weder die gering orientierten, grobtitrigen Filamente noch die anderen Fasern des erfindungsgemäßen Vliesstoffs müssen alle den gleichen Titer haben. Vielmehr können auch zwei odere mehrere Gruppen gering orientierter, grobtitriger Filamente mit unterschiedlichen, oberhalb 7 dtex liegenden Titern in dem gleichen Vliesstoff enthalten sein oder die Titer der gering orientierten, grobtitrigen Filamente können in einem Bereich oberhalb 7 dtex statistisch verteilt sein solange nur ihre Orientierung der Höchstzugkraftdehnung von mindestens 80 % entspricht.

Das gleiche gilt natürlich auch für die anderen Fasern des erfindungsgemäßen Vliesstoffes. Auch diese können in ein und demselben Vliesstoff in verschiedenen Titern oder in einem Titerspektrum, in dem die Titer statistisch verteilt sind, enthalten sein, wobei jedoch die bei ihnen die Titerbegrenzung auf Werte oberhalb 7 dtex nicht gilt.

Die Titer dieser "anderen Fasern" können daher auch kleiner sein als 7 dtx und liegen in der Regel bei 1 bis 30 dtex.

Durch die Wahl der Titermischung der Filamente und Fasern kann der Charakter der erfindungsgemäßen Vliesstoffe in recht weiten Grenzen variiert werden. So führt ein höherer Anteil grobtitriger Filamente und Fasern beispielsweise zu erhöhter Steifigkeit und geringerer Flächendeckung; ein höherer Anteil feiner Titer unter 10 dtex wird besonders dann bevorzugt, wenn die Flächendeckung des erfindungsgemäßen Vliesstoffes vergleichmäßigt und/oder dichter werden soll.

Es gibt verschieden Möglichkeiten zur Verteilung der gering orientierten, grobtitrigen und der anderen Fasern in den erfindungsgemäßen tiefziehfähigen Vliesstoffen. Die gering orientierten, grobtitrigen, Filamente und die anderen Fasern können in den tiefziehfähigen Vliesstoffen in praktisch homogener Mischung vorliegen, d.h. daß im Durchschnitt in jedem Raumelement des Vlieses die Verteilung von gering orientierten, grobtitrigen und anderen Fasern in etwa gleich ist. Der erfindungsgemäße tiefziehfähige Vliesstoff kann jedoch auch eine Schichtstruktur haben, bei der die gering orientierten, grobtitrigen Filamente und die anderen Fasern in unterschiedlichen Schichten enthalten sind. Hierbei wechseln Schichten mit gering orientierten, grobtitrigen Filamenten und Schichten mit anderen Fasern miteinander ab. Hierbei ist es bevorzugt, daß mindestens eine Außenseite des geschichteten Vliesstoffs, insbesondere aber beide Außenseiten Schichten aus niedrig orientierten, grobtitrigen Filamenten sind. Die Schichten eines solchen erfindungsgemäßen Vliesstoffes werden ebenfalls durch den sie durchsetzenden Schmelzbinder, insbesondere die sie durchsetzenden Bindefasern verbunden. Sie können aber auch - gegebenenfalls zusätzlich- mechanisch z. B. durch Nadeln miteinander verbunden werden.

Die hervorragende Stützfähigkeit der erfindungsgemäßen tiefziehfähigen Vliesstoffe kann auch in der Weise genutzt werden, daß ein erfindungsgemäßer Vliesstoff mit anderen bekannten Vliesstoffen kombiniert und punktuell oder vollflächig verbunden ist. Auch hierbei entsteht eine Schichtstruktur, die aufgrund der Anwesenheit mindestens einer Schicht eines erfindungsgemäßen Vliesstoffes eine gute Tiefziehfähigkeit aufweist. Bei der Kombination eines erfindungsgemäßen Schichtstoffes mit anderen bekannten Schichtstoffen ist die Zahl der Schichten in Prinzip nicht begrenzt, sondern wird durch den geplanten Verwendungszweck bestimmt. Eine solche Kombination weist in der Regel abwechselnd erfindungsgemäße und übliche Vliesstoffe auf und kann als Außenlage ein- oder beidseitig einen erfindungsgemäßen oder einen üblichen Vliesstoff aufweisen.

Das Flächengewicht der erfindungsgemäßen Vliesstoffe wird ebenfalls wesentlich, durch den geplanten Einsatzzweck des Materials bestimmt und liegt in der Regel im Bereich von 50 bis 500 $g/m^2$, vorzugsweise von 100 bis 300 $g/m^2$.

Die ausgezeichnete Verformbarkeit des erfindungsgemäßen Vliesstoffs beruht nicht nur auf der guten Verformbarkeit der darin enthaltenen, gering orientierten, grobtitrigen Filamente, sondern auch auf der guten Beweglichkeit der Filamente, die nur an ihren Berührungspunkten durch den Schmelzbinder verbunden sind.

Die im erfindungsgemäßen Vliesstoff enthaltenen grobtitrigen Einzelfilamente ergeben eine gute Eigenstabilität der tiefgezogenen Formkörper selbst dann, wenn diese kein oder noch kein stabilisierendes Harz enthalten.

Die Herstellung des erfindungsgemäßen tiefziehfähigen Spinnvlieses erfolgt in an sich bekannter Weise durch Ablage der Filamente auf einer bewegten Siebunterlage zu einem Wirrvlies und ist dadurch gekennzeichnet, daß zumindest 30 Gew.% gering orientierte, grobtitrige Filamente mit einem Titer von mehr als 7 dtex abgelegt werden. Die Blasdüsen für den Filamentabzug werden hierbei so eingestellt, daß diese grobtitrigen Filamente eine relativ geringe Vororientierung erhalten, die einer Höchstzugkraftdehnung von mindestens 80%, vorzugsweise von mindestens 100% entspricht. Besonders vorteilhaft ist es, die Abzugsdüsen so einzustellen, daß je nach dem geplanten Verwendungszweck des erfindungsgemäßen tiefziehfähigen Vlieses die gering orientierten, grobtitrigen Filamente Höchstzugkraftdehnungen im Bereich von 100 bis 350% aufweisen. Vorzugsweise wird der Einzeltiter der grobtitrigen gering orientierten Filamente im Bereich zwischen 8 und 30 dtex und ihr Anteil am Gesamtgewicht des Vlieses zwischen 80 und 100 Gew.% gewählt. Die Menge der pro $m^2$ abgelegten Filamente wird nach den oben angegebenen Kriterien bemessen, in der Regel werden 50 bis 500 g, vorzugsweise 100 bis 300 g Filamente pro $m^2$ abgelegt.

Die Filamentablage erfolgt vorzugsweise unter Einsatz einer rotierenden Prallplatte und insbesondere mit einer nachgeschalteten Leitfläche wie sie beispielsweise in der Deutschen Patentschrift 27 13 241 beschrieben ist. Zur Herstellung der erfindungsgemäßen tiefziehfähigen Spinnvliese mit der bevorzugten Schichtenstruktur, bei der gering orientierte, grobtitrige Filamente und andere Fasern in verschiedenen Schichten enthalten sind, erfolgt die Filamentablage durch mehrere in der Bewegungsrichtung der Siebunterlage hintereinanderliegenden Reihen von Ablageorganen, aus denen abwechselnd gering orientierte, grobtitrige, Filamente und andere Fasern abgelegt werden. Die Verfestigung des frisch abgelegten Spinnvlieses erfolgt in an sich bekannter Weise durch einen Schmelzbinder.

Der Schmelzbinder wird in der oben angegebenen Menge in Pulver- oder Filamentform in das abgelegte Vlies eingebracht. Die Verfestigung zum Vliesstoff erfolgt durch eine anschließende Wärmebehandlung des Vlieses, insbesondere mittels Kalander, wobei dieser glatte oder profilierte Walzen, z.B. Prägewalzen mit Gravur, besitzen kann. Die

Verfestigung kann ausschließlich durch Kalander erfolgen oder mittels Kalander (Vorverfestigung) und nachgeschalteter weiterer Wärmebehandlung, z.B. mittels Heißluft oder Strahlungsenergie. Bei dieser Wärmebehandlung schmelzen die Binder, vorzugsweise die Bindefilamente ganz oder teilweise und bilden an den Kreuzungspunkten der tragenden, grobtitrigen, gering orientierten Filamente die gewünschten Bindepunkte (Bindesegel) aus. Die Verfestigung durch den Schmelzbinder kann auch mit einer bekannten mechanischen Verfestigung, z.B. durch Nadeln kombiniert werden. Hierdurch kann, insbesondere bei dicken und/oder heterogenen Vliesstoffen, ein erheblicher Stabilitätsgewinn erreicht werden.

Die Filamente und Fasern des erfindungsgemäßen tiefziehfähigen Spinnvlieses können im Prinzip aus allen spinnfähigen Polymermaterialien bestehen. Das Polymermaterial aus dem die gering orientierten, grobtitrigen Filamente hergestellt werden, muß jedoch die Herstellung von Filamenten zulassen, die eine Höchstzugkraftdehnung von mindestens 80, vorzugsweise 100 insbesondere 100 bis 350% aufweisen. Für die anderen, in den erfindungsgemäßen Vliesen gegebenenfalls enthaltenen Fasern bestehen keine derartigen Beschränkungen.

Bevorzugte Polymerrohstoffe für die Herstellung der erfindungsgemäßen tiefziehfähigen Vliestoffe sind Polyester, Polyamide und Polyacrylnitril. Besonders bevorzugt sind Polyester und insbesondere solche, die zu mindestens 80 % aus Terephthalsäure- und Ethylenglycoleinheiten aufgebaut sind. Insbesondere ist bevorzugt ein Polymerrohstoff aus reinem oder höchstens 5 % modifizierende Baugruppen enthaltendem Polyethylenterephthalat.

Polyesterbausteine, die neben Terephthalsäure und Ethylenglycol in den einzusetzenden Polyestern enthalten sein können, sind die üblicherweise in spinnfähigen Polyestern eingesetzten, wie z.B. Isophthalsäure, Sulfoisophthalsäure, Naphthalincarbonsäuren, aromatische Hydroxycarbonsäuren, beispielsweise p-Hydroxybenzoesäure, aliphatische Dicarbonsäuren mit etwa 4 bis 10 C-Atomen, beispielsweise Adipinsäure, Glycole mit 3 bis 10 C-Atomen, Diglycol, Triglycol oder Polyglycol.

Gegenstand der vorliegenden Erfindung ist auch ein tiefziehfähiger Vliesstoff der oben beschriebenen Art, der zusätzlich mit einem thermoplastischen oder hitzehärtenden Harz imprägniert ist. Als thermoplastisches oder hitzehärtendes Harz wird vorzugsweise ein solches verwendet, das den Vliesstoff so versteift, daß er selbsttragend wird. Besonders bevorzugt ist ein erfindungsgemäßer Vliesstoff, der mit einem bekannten, hitzehärtenden Harz, insbesondere einem Phenol- oder Melaminharz imprägniert ist. Die Harzauflage, d.h. die pro

$m^2$ des Textilmaterials aufgebrachte Harzmenge, richtet sich nach dem Einsatzgebiet und wird vorzugsweise so bemessen, daß sich ein im Wesentlichen offenporiges Vliesnetzwerk ergibt.

Unter einem offenporigen Vliesnetzwerk ist ein Material zu verstehen, das im wesentlichen die offenporige Struktur des ursprünglichen Vlieses beibehalten hat, bei dem das Harz somit nur die Einzelfilamente ganz oder teilweise ummantelt und an den Filamentkreuzungspunkten Bindepunkte ausbildet. Geeignete Auflagemengen des Harzes liegen im Bereich von 20 bis 80, vorzugsweise von 40 bis 50 Gew.% des Halbzeugs. Innerhalb der angegebenen Bereiche kann die Harzmenge noch zweckmäßig an das $m^2$-Gewicht des erfindungsgemäßen Vliesstoffes angepaßt werden. Bei Einsatz eines schweren erfindungsgemäßen Vliesstoffes arbeitet man vorzugsweise in der oberen Hälfte des angegebenen Bereichs, bei leichten Textilien in der unteren Hälfte. Für spezielle Anwendungen kann es auch vorteilhaft sein, die Harzauflagemenge so weit zu erhöhen, daß auch im gedehnten Zustand noch ein Harzfilm zwischen den Fäden des Vliesnetzwerkes stehen bleibt.

Die Herstellung der beschriebenen harzimprägnierten erfindungsgemäßen tiefziehfähigen Vliesstoffe kann problemlos dadurch erfolgen, daß man den oben beschriebene Vliesstoff einem üblichen Harzimprägnierungsprozeß unterwirft. Der Harzauftrag kann in üblicher Weise durch Streichen, Bürsten, Rakeln, Pflatschen oder durch Tauchen erfolgen. Der mit Harz beaufschlagte Vliesstoff wird dabei anschließend zweckmäßigerweise durch ein Quetschwalzenpaar auf die gewünschte Harzaufnahme abgequetscht. In einer bevorzugten Ausführungsform erfolgt der Harzauftrag durch ein "Umkehrverfahren", bei dem das Hart zunächst auf ein Trägermaterial gleichmäßig aufgebracht wird. Mit dem beharzten Träger wird dann der erfindungsgemäße tiefziehfähige Vliesstoff in engen Flächenkontakt gebracht, wobei der Vliesstoff durch seine Kapillarkräfte das Harz vom Träger absaugt.

Es ist keineswegs erforderlich, daß der Harzauftrag über der gesamten Fläche des Vliesstoffes gleichmäßig sein muß. Vielmehr kann das Harz auch in Form eines regelmäßigen Musters oder in unregelmäßiger, aber statistisch gleichmäßiger Verteilung aufgebracht werden. Hierbei ist jedoch zu beachten, daß die unbeharzten Flächen nicht zu groß werden, damit noch eine ausreichende Versteifung des gesamten unverformten oder dreidimensional verformten Flächengebildes erzielt wird.

Eine wirkungsvolle statistische Harzverteilung ergibt sich beispielsweise wenn das Harz durch das oben beschriebene Umkehrverfahren auf einen erfindungsgemäßen Vliesstoff aufgebracht wird, der einen Schichtaufbau zeigt, bei dem einseitig überwiegend grobe, gering orientierte, auf der anderen Seite überwiegend feinertitrige, normal oder stark orientierte Filamente vorhanden sind. Der Harzübertrag erfolgt dabei von der grobtitrigen Seite her und die grobtitrigen Filamente ziehen dabei den überwiegenden Anteil des Harzes an sich und bilden nach dem Tiefziehen und Aushärten des Harzes ein besonders wirkungsvoll versteiftes Stütznetzwerk.

Thermoplastische Harze werden für den Imprägniervorgang zweckmäßigerweise in Form von Lösungen oder vorzugsweise von Emulsionen aufgebracht; hitzehärtbare Harze zweckmäßigerweise in der handelsüblichen Form als hochkonzentrierte wäßrige Lösungen oder Dispersionen.

Der erfindungsgemäße, gegebenenfalls harzimprägnierte, tiefziehfähige Vliesstoff kann mit besonderem Vorteil zur Herstellung dreidimensional verformter textiler Flächengebilde eingesetzt werden. Auch diese dreidimensionalen Gebilde sind Gegenstand der vorliegenden Erfindung.

Sie bestehen aus einem dreidimensional verformten, offenporigen Vliesstoff, der dadurch gekennzeichnet ist, daß mindestens 30 Gew.% der Filamente gering orientierte, grobtitrige Filamente sind, die auch in den verformten Bereichen nur bis unterhalb ihrer Höchstzugkraftdehnung verdehnt, d.h. nicht gerissen sind.

Sie enthalten ein relativ grobporiges Stütznetzwerk, das von den gering orientierten, grobtitrigen Filamenten, die im Bereich der Verformungen stärker verstreckt sind, gebildet wird und das gegebenenfalls zusätzlich durch ein thermoplastisches oder duroplastisches Harz versteift ist. Bei den erfindungsgemäßen dreidimensional verformten textilen Flächengebilden, die nicht ausschließlich aus den gering orientierten, grobtitrigen Filamenten bestehen, erstreckt sich zwischen den relativ groben Öffnungen des Stütznetzwerks das aus den anderen, ggf. feinertitrigen Filamenten gebildete, gegebenenfalls ebenfalls harzversteifte poröse Vlies mit seinen zahllosen feinen Öffnungen.

In einer speziellen, jedoch wegen des höheren Gewichts weniger bevorzugten Ausführungsform, können die Poren des verformten Vliesstoffes auch durch das duroplastische oder thermoplastische Harz ausgefüllt sein.

Die Figur 1 zeigt schematisch eine mögliche Formgebung für ein erfindungsgemäßes, dreidimensional verformtes Flächengebilde (3) mit einer Vielzahl von aus einer textilen Grundfläche (4) (Vliesstoff) herausgezogenen "Näpfchen" (5).

Die Figur 2 zeigt schematisch in vergrößerter Darstellung eines der "Näpfchen " (5) des Gebildes der Figur 1.

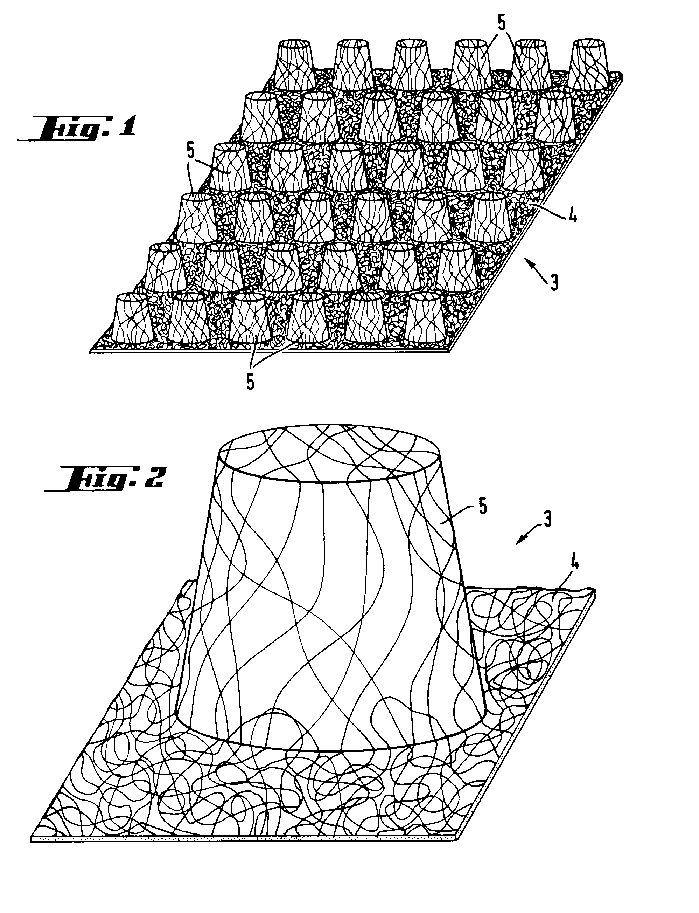

In den Figuren 1 und 2 ist aus Gründen der Klarheit und Übersichtlichkeit schematisch nur das aus den gering orientierten, grobtitrigen Filamenten gebildete Stütznetzwerk und jeweils nur die Struktur der dem Betrachter zugewandten Flächen der "Näpfchen" dargestellt, nicht aber die durch die offenporige Vliesstoff-Struktur hindurch sichtbaren Rückseiten.

Die Figur 2 zeigt schematisch besonders klar die offenen Faserzwischenräume der offenporigen Vliesstoffstruktur.

In einer besonders im Hinblick auf die weitere Verwendung als Kernmaterial für die Herstellung von Schichtstoffen spezifizierten Ausführungsform, weist das erfindungsgemäße dreidimensional verformte flächenförmige Textilmaterial auf einer Basisfläche in regelmäßiger Anordnung eine Vielzahl von Erhebungen auf. In einer weiteren Ausführungsform weist das erfindungsgemäße dreidimensional verformte Material auf der Ebene der Basisfläche in regelmäßiger Anordnung eine Vielzahl von Erhebungen und Vertiefungen auf. Die Erhebungen und Vertiefungen können die Form von Näpfchen mit runder oder eckiger Basisfläche oder z.B. von Stegen haben, die zweckmäßigerweise ein flaches Plateau bzw. einen flachen Boden aufweisen, die vorzugsweise alle in einer Ebene und parallel zur Basisfläche liegen.

Das erfindungsgemäße dreidimensional verformte flächenförmige Textilmaterial wird hergestellt entweder indem man einen erfindungsgemäßen beharzten Vliesstoff einem an sich bekannten Tiefziehprozeß unterwirft, oder indem man einen unbeharzten erfindungsgemäßen Vliesstoff tiefzieht und die erhaltene dreidimensional verformte Struktur anschließend beharzt, oder indem man einen unbeharzten erfindungsgemäßen Vliesstoff gemeinsam mit einer Harzfolie passenden Flächengewichts dem Tiefziehprozeß unterwirft.

Ein weiterer Gegenstand der vorliegenden Erfindung ist ein flächenförmiger Sandwichformkörper bestehend aus zwei äußeren festen Deckschichten, die über einen Kern, bestehend aus dem oben beschriebenen erfindungsgemäßen dreidimensional verformten, harzverstärkten flächenförmigen Textilmaterial verbunden sind. Die Verbindung zwischen Deckschichten und den Plateauflächen der Erhebungen bzw. den Bodenflächen der Vertiefungen des erfindungsgemäßen Kernmaterials kann durch übliche Laminierverfahren unter Verwendung von Klebstoffen, insbesondere von kalt- oder hitzehärtenden Klebstoffen wie z.B. Epoxidharzen oder Duroplastharzen erfolgen. Aufgrund der großen Kontakfläche zwischen dem Kernmaterial und den Deckschichten erweist sich die Verklebung als überaus stabil. Trotz der offenporigen Vliesstoffstruktur des erfindungsgemäßen Kernmaterials haben die damit hergestellten Sandwichformkörper eine überraschend hohe Druckfestigkeit bei extrem niedrigem Gewicht. Sie eignen sich daher hervorragend als Material zum Innenausbau von Fahrzeug-, insbesondere von Flugzeugzellen. Hierbei sind erfindungsgemäße, dreidimensional verformte textile Vliesstoffe aus flammhemmend ausgerüstetem Filamentmaterial besonders bevorzugt.

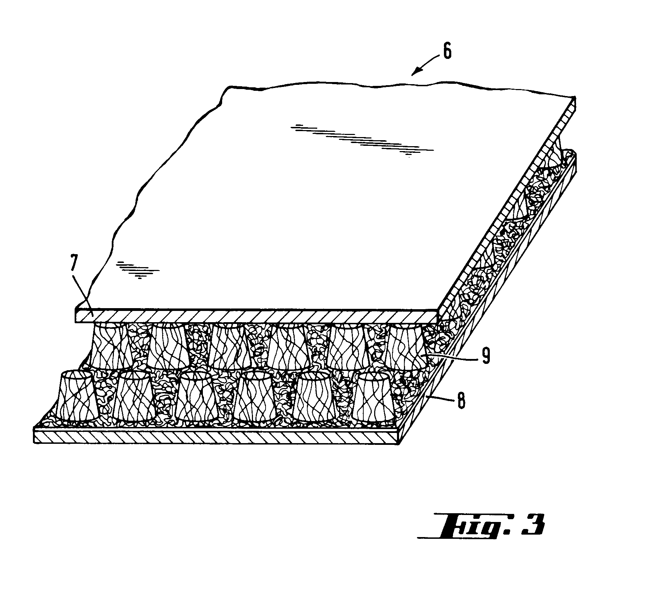

Die Figur 3 zeigt eine Sandwichkonstruktion (6) mit den Deckflächen (7) und (8) und einem Kern (9) aus einem erfindungsgemäßen, dreidimensional verformten Flächengebilde.

**Patentansprüche**

1. Isotroper, gut tiefziehfähiger Vliesstoff, dadurch gekennzeichnet, daß er als Filamentvliesstoff ausgebildet ist, der mindestens 30 Gew.% gering orientierte, grobtitrige Filamente mit einem Titer von mehr als 7 dtex enthält und durch einen Schmelzbinder verfestigt ist.

2. Vliesstoff gemäß Anspruch 1, dadurch gekennzeichnet, daß die Orientierung der gering orientierten, grobtitrigen Filamente einer Höchstzugkraftdehnung von mindestens 80%, vorzugsweise von mindestens 100% entspricht.

3. Vliesstoff gemäß mindestens einem der Ansprüche 1 und 2, dadurch gekennzeichnet, daß die gering orientierten, grobtitrigen Filamente Einzeltiter von 7 bis 30 dtex haben.

4. Vliesstoff gemäß mindestens einem der Ansprüche 1 bis 3, dadurch gekennzeichnet, daß der Vliesstoff zu 40 bis 85 Gew.% aus den gering orientierten, grobtitrigen Filamenten besteht.

5. Vliesstoff gemäß mindestens einem der Ansprüche 1 bis 4, dadurch gekennzeichnet, daß er ausschließlich aus gering orientierten, grobtitrigen Filamenten geringer Orientierung besteht.

6. Vliesstoff gemäß mindestens einem der Ansprüche 1 bis 5, dadurch gekennzeichnet, daß die gering orientierten, grobtitrigen Filamente und andere Filamente in einer praktisch homogenen Mischung vorliegen.

7. Vliesstoff gemäß mindestens einem der Ansprüche 1 bis 5, dadurch gekennzeichnet, daß die gering orientierten, grobtitrigen Filamente und andere Filamente vorwiegend in verschiedenen Schichten des Vliesstoffes, die mechanisch untereinander verbunden sind, vorliegen.

8. Vliesstoff gemäß mindestens einem der Ansprüche 1 bis 7, dadurch gekennzeichnet, daß das Flächengewicht des Vliesstoffs im Bereich von 50 bis 500 g pro m$^2$, vorzugsweise von 100 bis 300 g pro m$^2$ liegt.

9. Vliesstoff gemäß mindestens einem der Ansprüche 1 bis 8, dadurch gekennzeichnet, daß der Vliesstoff zusätzlich mit einem anderen bekannten Vliesstoff kombiniert und punktuell oder vollflächig verbunden ist.

10. Verfahren zur Herstellung des Spinnvlieses des Anspruchs 1 durch Ablage der Filamente zu einem Wirrvlies in an sich bekannter Weise, dadurch gekennzeichnet, daß zumindest 30 Gew.% gering orientierte, grobtitrige Filamente abgelegt werden, deren Einzeltiter über 7 dtex liegt und die Verfestigung des Vlieses durch Einbringen eines Schmelzbinders und anschließende Wärmebehandlung erfolgt.

11. Verfahren gemäß Anspruch 10, dadurch gekennzeichnet, daß die Filamentablage durch mehrere in Bewegungsrichtung der Vliestransporteinrichtung hintereinanderliegenden Reihen von Ablageorganen, die abwechselnd gering orientierte, grobtitrige und andere Filamente ablegen, erfolgt.

12. Isotroper, gut tiefziehfähiger Vliesstoff gemäß mindestens einem der Ansprüche 1 bis 9, dadurch gekennzeichnet, daß er zusätzlich mit einem thermoplastischem oder hitzehärtenden Harz imprägniert ist.

13. Tiefziehfähiger Vliesstoff gemäß Anspruch 12, dadurch gekennzeichnet, daß die Harzauflage so bemessen wird, daß sich ein im wesentlichen offenporiges Vliesstoff-Netzwerk ergibt.

14. Verfahren zur Herstellung des tiefziehfähigen harzimprägnierten Vliesstoffs des Anspruch 12, dadurch gekennzeichnet, daß man gemäß Anspruch 10 einen tiefziehfähigen Vliesstoff herstellt, und diesen anschließend mit einem thermoplastischen oder hitzehärtenden Harz imprägniert.

15. Dreidimensional verformter, offenporiger Vliesstoff, dadurch gekennzeichnet, daß mindestens 30 Gew.% der Filamente gering orientierte, grobtitrige Filamente sind, die auch in den verformten Bereichen nur bis unterhalb ihrer Höchstzugkraftdehnung verdehnt sind.

16. Dreidimensional verformter offenporiger Vliesstoff gemäß Anspruch 15, dadurch gekennzeichnet, daß er zusätzlich mit einem thermoplastischen oder hitzehärtenden Harz versteift ist.

17. Verfahren zur Herstellung des dreidimensional verformten Vliesstoffs des Anspruchs 15, dadurch gekennzeichnet, daß man einen tiefziehfähigen Vliesstoff des Anspruchs 1 durch einen Tiefziehprozeß mit einer regelmäßigen Anordnung einer Vielzahl von Erhebungen und Vertiefungen versieht.

18. Verfahren zur Herstellung des dreidimensional verformten harzversteiften Vliesstoffs des Anspruchs 16, dadurch gekennzeichnet, daß man einen tiefziehfähigen Vliesstoffs des Anspruchs 1 gemeinsam mit einer Harzfolie durch einen Tiefziehprozeß mit einer regelmäßigen Anordnung einer Vielzahl von Erhebungen und Vertiefungen versieht.

19. Verfahren zur Herstellung des dreidimensional verformten Vliesstoff des Anspruchs 16, dadurch gekennzeichnet, daß man einen dreidimensional verformten Vliesstoff nach dem Verfahren des Anspruchs 17 herstellt, und diesen anschließend mit einem thermoplastischen oder duroplastischen Harz imprägniert und gegebenenfalls aushärtet.

20. Verfahren zur Herstellung des dreidimensionalen verformten Vliesstoffs des Anspruchs 16, dadurch gekennzeichnet, daß man einen tiefziehfähigen harzimprägnierten Vliesstoff des Anspruchs 12, durch einen Tiefziehprozeß mit einer regelmäßigen Anordnung einer Vielzahl von Erhebungen und Vertiefungen versieht.

21. Flächenförmiger Sandwichformkörper bestehend aus zwei äußeren festen Deckschichten, die über einen Kern aus leichtem Material verbunden sind, dadurch gekennzeichnet, daß der Kern aus dem dreidimensional verformten, harzversteiften Vlies des Anspruchs 16 besteht.

22. Verfahren zur Herstellung des Sandwichformkörpers des Anspruchs 21, dadurch gekennzeichnet, daß man gemäß einem der Ansprüche 17 bis 20 ein dreidimensional verformtes, harzversteiftes Vlies erzeugt und auf dieses anschließend beidseitig die Deckschichten in an sich bekannter Weise auflaminiert.

Fig. 1

Fig. 2

*Fig. 3*

# EUROPÄISCHER RECHERCHENBERICHT

Nummer der Anmeldung

**EP 91 11 2816**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 834 438   (Fa. CARL FREUDENBERG)<br>* Seiten 5-8 * | 1,2,10 | D 04 H 1/00<br>D 04 H 3/12 |
| A | | 3-6,13-15 | |
| Y,D | FR-A-2 465 817   (CARL FREUDENBERG)<br>* Das ganze Dokument * | 1,2,10 | |
| A | | 15-19 | |
| A | FR-A-1 484 774   (SOCIETE RHODIACETA)<br>* Das ganze Dokument * | 1,8,15-20 | |
| A | EP-A-0 237 665   (MITSUBISHI)<br>* Ansprüche 1,2,4-9 * | 12-14,<br>16-19 | |
| A | DE-A-3 844 458   (HOECHST) | | |

RECHERCHIERTE SACHGEBIETE (Int. Cl.5)

D 04 H

Der vorliegende Recherchenbericht wurde für alle Patentansprüche erstellt

| Recherchenort | Abschlußdatum der Recherche | Prüfer |
|---|---|---|
| Den Haag | 07 November 91 | DURAND F.C. |